# EUROPÄISCHE PATENTSCHRIFT

(11) **EP 1 704 358 B1**
(45) Veröffentlichungstag und Bekanntmachung des Hinweises auf die Patenterteilung: **27.02.2008**
(21) Anmeldenummer: 04804299.8
(22) Anmeldetag: 24.12.2004
(51) Int. Cl.: F16L 25/01, H01R 13/00

(54) **ANSCHLUSSVORRICHTUNG FÜR DAS FREIE ENDE EINES HYBRIDSCHLAUCH ES**
CONNECTION DEVICE FOR THE FREE END OF A HYBRID HOSE
SYSTEME DE RACCORDEMENT POUR L'EXTREMITE LIBRE D'UN TUYAU HYBRIDE

(30) Priorität: 15.01.2004 DE 202004000551 U; 14.05.2004 DE 202004007951 U
(43) Veröffentlichungstag der Anmeldung: 27.09.2006
(73) Patentinhaber: Festo AG & Co., 73734 Esslingen (DE)
(72) Erfinder: BRENNER, Hans-Walter, 70565 Stuttgart (DE); CLAUS, Hans-Jürgen, 70199 Stuttgart (DE); ZOLLER, Klaus, 70186 Stuttgart (DE); HACKEMACK, Frank, 32758 Detmold (DE); FEHLING, Stephan, 32791 Lage (DE); HANNING, Walter, 32758 Detmold (DE); JASCHKE, Bernhard, 32791 Lage (DE); EGGERT, Gerhard, 32760 Detmold (DE); HÖING, Michael, 32657 Lemgo (DE)
(74) Vertreter: Dantz, Jan Henning
(86) Internationale Anmeldenummer: PCT/EP2004/014708
(87) Internationale Veröffentlichungsnummer: WO 2005/068891

(56) Entgegenhaltungen:
- WO-A-96/25083
- DE-A1- 10 204 738
- DE-A1- 10 243 878
- US-A- 5 791 377

## Beschreibung

Die Erfindung betrifft eine Anschlussvorrichtung für das freie Ende eines Hybridschlauchs nach dem Oberbegriff des Anspruchs 1.

Eine Anschlussvorrichtung, allerdings für Hybridschläuche mit Leitungsadern, mit Kontaktringen, welche nach Art von Piercingkontakten die Leitungsadern kontaktieren, ist aus der DE 102 04 738 A1 bekannt. Eine Anschlussvorrichtung der gattungsgemäßen Art ist ferner aus der US 5,791,377 bekannt.

Die Erfindung hat die Aufgabe, eine Anschlussvorrichtung für Hybridleitungen mit streifenförmigen Leitern zu schaffen, welche auf einfache Weise eine zuverlässige Kontaktierung der streifenförmigen Leiter erlaubt.

Die Erfindung löst diese Aufgabe durch den Gegenstand des Anspruchs 1.

Als besonders vorteilhaft hervorzuheben ist die Möglichkeit zur einfachen Montage der Anschlußvorrichtung am Hybridschlauch, ohne dass es notwendig wäre, den Leiter in besonderer Weise Drehhauszurichten oder mit Polarisierungsmitteln zu versehen, da durch die Erfindung stets eine sichere Kontaktierung der zwei Leiter realisiert wird.

Nach einer vorteilhaften Variante ist das hülsenartige Innenteil mit wenigstens einem Stromschienenstück versehen, welcher das hülsenartige Innenteil auf einfache Weise jeweils von außen nach innen durchsetzt.

Nach einer weiteren zweckmäßigen Variante ist ein äußerer Abschnitt des Stromschienenstücks ausgehend vom Ort seines Durchtrittes durch das hülsenartige Innenteil zu einem an einem Umfangsabschnitt des hülsenartigen Innenteils angeordneten Kontaktstekker gebogen.

Bevorzugt sind ferner die äußeren Abschnitte der Stromschienenstücke jeweils zu parallel nebeneinanderliegenden Kontaktsteckern gebogen, die einfach zu handhaben sind.

Nach einer weiteren vorteilhaften Variante ist der innere Abschnitt des Stromschienestücks derart ausgerichtet, dass er kompakt im wesentlichen tangential zum elektrischen Leiter des Hybridschlauchs ausbildet ist.

Nach einer besonders bevorzugten weiteren Ausgestaltung sind drei der Federkontakte um jeweils 120° am Innenumfang des Innenteils versetzt zueinander angeordnet sind und weisen eine Breite bezüglich des Innenumfanges des Innenteils auf, dass die Leiter beim Aufschieben des hülsenartigen Innenteils auf den Hybridschlauch unabhängig von der Winkelausrichtung mindestens zweifach kontaktiert werden. Diese Variante ist besonders kontaktsicher und dennoch konstruktiv einfach.

Bevorzugt weist das innere Hülsenteil an seinem vom Hybridschlauch abgewandten Ende eine umlaufende Rastausnehmung zum vorteilhaften Zusammenwirken mit den äußeren Hülsenteil auf sowie einen umfangsseitigen Vorsprung in axialer Richtung hinter dem Kontaktstecker.

Bevorzugt weist ferner das äußere Hülsenteil einen inneren Rastvorsprung zum Zusammenwirken mit der inneren Rastausnehmung des inneren Hülsenteils sowie einen seitlichen Ansatz auf, der am Vorsprung des inneren Hülsenteils anliegt und im zusammengesteckten Zustand in einfacher Weise den Federkontakt aufnimmt.

Besonders bevorzugt wird ferner eine Ausbildung, bei der das Freilegen des wenigstens einem elektrischen Leiters des Hybridschlauchs unkompliziert durch ringweises - segmentweises - Abtrennen des äußeren Isoliermantels and verschiedenen axialen Stellen erfolgt, wobei in die ringartige wenigstens eine Freimachung wenigstens ein Kontaktring eingesetzt ist. Zweckmäßig ist dabei ferner eine Ausgestaltung, nach der die inneren Abschnitte der Stromschienenstücke derart ausgerichtet sind, dass sie axial zueinander versetzt am Innenumfang des Innenteils liegen, so dass sie im montierten Zustand jeweils einen Kontaktring kontaktieren. Derart ist zwar das Abisolieren des Hybridschlauches geringfügig aufwendiger, aber es sind nur zwei Stromschienen zur Kontaktierung erforderlich.

Vorzugsweise ist der Kontaktring rundum geschlossen oder geschlitzt oder segmentartig ausgebildet und weist sich radial erstreckende Kontaktspitzen auf, welche den Leiter kontaktieren.

Mittels einer Auswerteelektronik (hier nicht dargestellt) kann einfach festgestellt werden (z.B. mittels Widerstandsbestimmung oder dgl.), welche Federkontakte welche die Leiter kontaktieren (zwei jeweils den einen Leiter und der dritte den anderen Leiter). Hierbei wird der Hybridschlauch axial zunächst vom Isoliermantel abisoliert und dann an einer zweiten axialen Stelle die Leiter durchtrennt und der Fluidschlauch freigelegt. Hier ist insbesondere das Abisolieren sehr einfach, allerdings muss die Belegung der Federkontakte mittels einer externen Elektronik (Steuerungseinrichtung oder dgl.) überprüft werden.

Weitere vorteilhafte Ausgestaltungen sind den übrigen Unteransprüchen zu entnehmen.

Nachfolgend wird die Erfindung anhand von Ausführungsbeispielen unter Bezug auf die Zeichnung näher beschrieben. Es zeigt:
- Fig. 1a: ein erstes Ausführungsbeispiel einer erfindungsgemäßen Anschlussvorrichtung mit Hybridschlauch in einer teilweisen Sprengansicht;
- Fig. 1b: den Hybridschlauch aus Fig. 1a in einer Einzeldarstellung mit den Stromschienen aus Fig. 1a;
- Fig. 1c: den Hybridschlauch aus Fig. 1a und eine halbgeschnittene Darstellung des hülsenartigen Innenteils aus Fig. 1a;
- Fig. 1d: den Hybridschlauch aus Fig. 1a mit aufgesetzter Anschlussvorrichtung in halbgeschnittener Darstellung;
- Fig. 1e: den Hybridschlauch aus Fig. 1a mit aufgesetzter Anschlussvorrichtung in geschnittener Darstellung;
- Fig. 1f: einen Schnitt durch den Hybridschlauch der Fig. 1a;
- Fig. 2a: ein erstes Ausführungsbeispiel einer erfindungsgemäßen Anschlussvorrichtung mit Hybridschlauch in einer teilweisen Sprengansicht;
- Fig. 2b: den abisolierten Hybridschlauch aus Fig. 2a;
- Fig. 2c: den Hybridschlauch aus Fig. 2a mit aufgesetzter Anschlussvorrichtung in halbgeschnittener Darstellung;
- Fig. 2d: den Hybridschlauch aus Fig. 2a mit aufgesetzter Anschlussvorrichtung in geschnittener Darstellung; und
- Fig. 2e: einen Schnitt durch den Hybridschlauch der Fig. 2a.

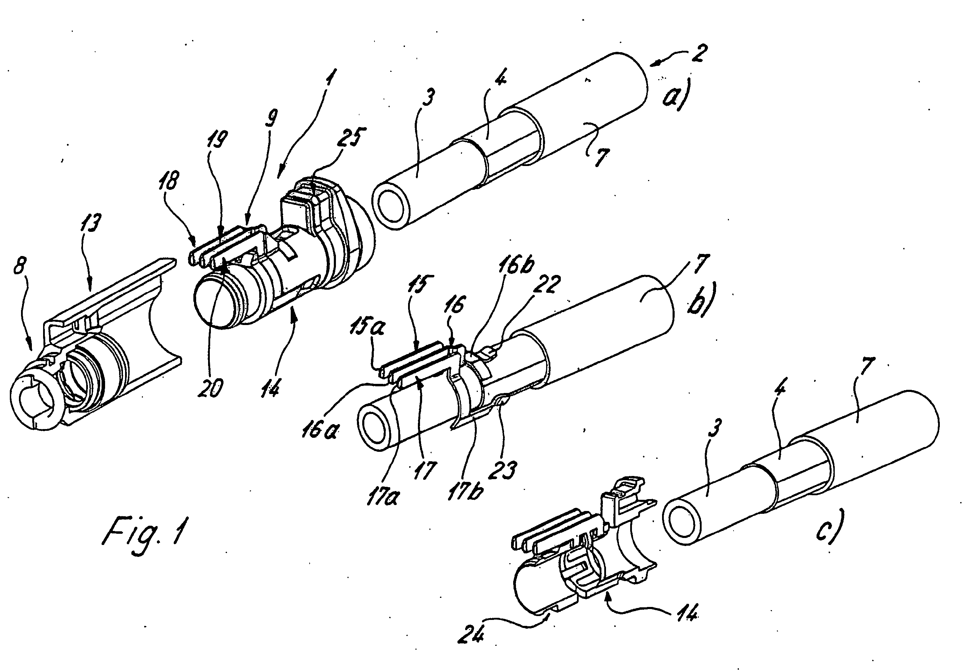

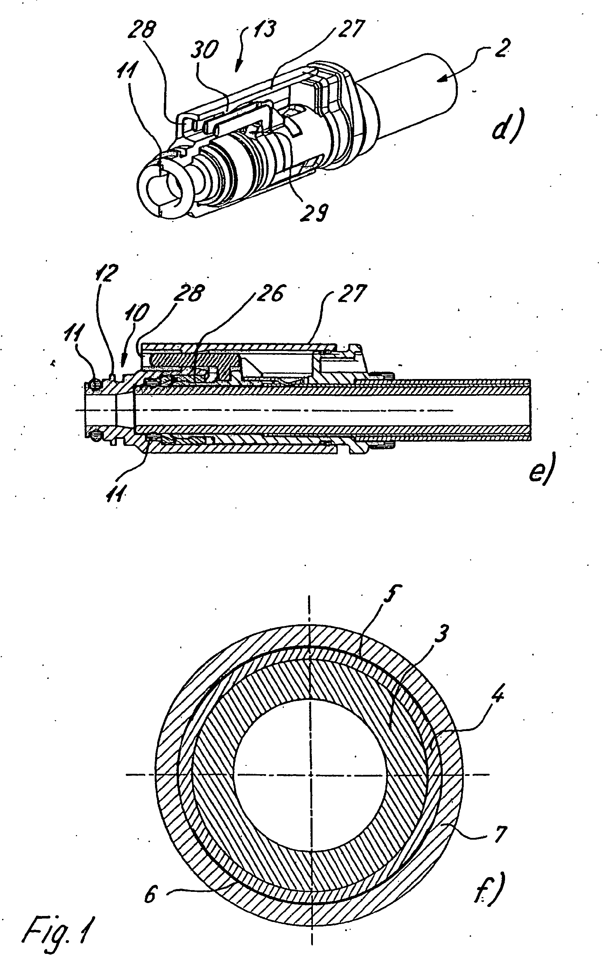

Fig. 1 zeigt eine Anschluss- bzw. Kupplungsvorrichtung 1 für das freie Ende eines Hybridschlauchs 2, der hier beispielhaft einen mehrschichtigen Aufbau mit einem inneren flexiblen Fluid-, insbesondere Pneumatikschlauch 3 sowie wenigstens einer oder hier zwei direkt auf dem Außenumfang des Kunststoff-Fluidschlauchs 3 oder auf eine Trägerschicht 4 aufgelegte streifenartigen Leiter 5,6 aufweist, welche von einem Isoliermantel 7 umgeben sind.

Die Anschlussvorrichtung 1 kann mit einer hier nicht dargestellten korrespondierenden weiteren Anschlussvorrichtung zu einer Art übergreifenden Kupplung zusammengesteckt werden und dazu verwendet werden, die Hybridleitung 2 an eine entsprechende Anschlussvorrichtung eines Gerätes oder eine weiteren Hybridleitung anzuschließen (hier nicht dargestellt).

Die Anschlussvorrichtung 1 weist eine erste Verbindungsvorrichtung 8 auf, an welche der Fluidschlauch angeschlossen ist und die zur Verbindung mit einer korrespondierenden Leitung der nicht dargestellten korrespondierenden Anschlussvorrichtung ausgelegt ist. Sie umfasst ferner eine zweite Verbindungsvorrichtung 9, an welche die elektrischen Leiter 5, 6 des Hybridschlauches angeschlossen sind und die zur Verbindung mit einer korrespondierenden Verbindungsvorrichtung für elektrische Leiter 5, 6 der nicht dargestellten korrespondierenden Anschlussvorrichtung (bzw. einer zweiten Kupplungsvorrichtung) ausgelegt ist.

Dabei soll die erste Verbindungsvorrichtung 8 zum Anschluss der Fluidleitungen hier nicht näher betrachtet werden. Sie kann in beliebiger Weise mittels geeigneter Fluidstekker 10 mit Dichtungen 11 und Rastmitteln 12 und/oder dgl. realisiert werden.

Wichtig ist, dass die Anschlussvorrichtung 1 in einfacher Weise die Möglichkeit zur Verbindung externer elektrischer Leiter mit den elektrischen Leitern am Hybridschlauch erlaubt. Vorzugsweise soll eine Verbindung zwischen der ersten Anschlussvorrichtung 8 und dem freien Ende des Hybridschlauches 2 bzw. des inneren Fluidschlauchs 3 einfach durch Zusammenstecken der Hybridleitung mit der Anschlussvorrichtungl realisiert werden.

Die Anschlussvorrichtung 1der Fig.1 besteht aus einem hülsenartigen Außenteil 13 und einem ebenfalls hülsenartigen Innenteil 14, wobei zunächst das Innenteil 14 auf das freie axiale Ende des Hybridschlauches 2 aufschiebbar ist und danach das Außenteil 13, welches das hülsenartige Innenteil 14 in der Montagestellung zumindest abschnittsweise außen umgibt.

Das hülsenartige Innenteil 14 ist mit mehreren, hier drei, Stromschienenstücken 15, 16, 17 versehen, welche das hülsenartige Innenteil 14 jeweils von außen nach innen durchsetzen. Dabei sind die äußeren Abschnitte 15a, 16a, 17a der Stromschienenstücke 15, 16, 17 ausgehend vom Ort ihres Durchtrittes durch das hülsenartige Innenteil 14 jeweils zu parallel nebeneinander liegenden und an einem Umfangsabschnitt des hülsenartigen Innenteils 14 zusammengefassten Kontaktfahnen oder Kontaktsteckern 18, 19, 20 gebogen, an die entweder direkt korrespondierende Leiter angeschlossen werden können oder korrespondierende Stecker, Buchsen oder ähnliche Einrichtungen einer korrespondierenden Kupplungsvorrichtung.

Die inneren Abschnitte 16b, 17b der Stromschienenstücke sind dagegen derart ausgerichtet, dass sie im wesentlichen tangential zu einem Zylinder liegen, dessen Oberfläche die elektrischen Leiter 5, 6 des Hybridschlauches 2 ausbilden. An ihren freien Enden bilden sie im Bereich einer Auswölbung oder Durchbiegung jeweils einen Federkontakt 22, 23 aus.

Die einzelnen Federkontakte 22, 23 sind dabei am Außenumfang um jeweils 120°versetzt zu einander angeordnet und derart ausgelegt (breit), dass beim Aufschieben des hülsenartigen Innenteils 14 auf den Hybridschlauch 2 die zwei Leiter unabhängig von der Winkelausrichtung insgesamt stets dreifach kontaktiert werden. Mittels einer Auswerteelektronik (hier nicht dargestellt) kann einfach festgestellt werden (z.B. mittels Widerstandsbestimmung oder dgl.), welche Federkontakte 21, 22, 23 welche Leiter 5, 6 kontaktieren.

Nach Fig. 1 weist einer Federkontakte (21) in Umfangsrichtung eine etwas längere Erstreckung auf als die anderen zwei Federkontakte. Wesentlich ist dabei, dass die Erstreckung derart ist, dass stets die Dreipunktkontaktierung erreicht wird, ohne dass eine besondere Ausrichtung zwischen dem Hybridschlauch 2 und dem inneren Hülsenteil 14 erforderlich ist.

Das innere Hülsenteil 14 weist noch an seinem vom Hybridschlauch 2 abgewandten Ende eine hier umlaufende Rastausnehmung 24 auf, welche zum Zusammenwirken mit einen inneren Rastvorsprung 26 des äußeren Hülsenteils 13 ausgelegt ist. Das innere Hülsenteil 14 ist zudem mit einem radialen, gehäuseartigen Vorsprung 25 in axialer Richtung hinter den drei Kontaktsteckern 18, 19 20 versehen.

Das äußere Hülsenteil 13 weist die wesentlichen Einrichtungen der ersten "Fluid-Verbindungsvorrichtung" auf sowie hier noch einen seitlichen Ansatz 27, der im zusammengesteckten Zustand die drei Federkontakte aufnimmt, welche durch eine vordere Öffnung 28 im Ansatz 27 zugänglich bleiben.

Zur Montage wird einfach der Hybridschlauch 3 axial versetzt Schicht um Schicht abisoliert, d.h., bis zu einer ersten axialen Stelle wird der äußere Isoliermantel 7 durchtrennt, so dass ab hier die elektrischen Leiter 5, 6 nach außen hin frei liegen und an einer zweiten axialen Stelle werden dann die elektrischen Leiter 5, 6 und die Trägerschicht 4 durchtrennt, so dass ab hier nur der innere Fluidschlauch 3 freiliegt. Sodann wird dass innere Hülsenteil 14 aufgeschoben, welches die elektrischen Leiter 5, 6 kontaktiert und dann das äußere Hülsenteil 15, welches am inneren Hülsenteil 14 verrastet.

Das innere und/oder das äußere Hülsenteil 13, 14 können noch Funktionsvorsprünge 29, 30 oder dgl. aufweisen, welche jeweils zur Lagesicherung der Stromschienenstücke 15, 16, 17 dienen.

Nach Fig. 1 werden einfach durch Aufschieben ohne komplizierte Montage sowohl die elektrischen Leiter 5, 6 als auch der Fluidschlauch 2, 3 mit der Kupplungseinrichtung 1 verbunden, ohne dass die Handhabung gegenüber einer Kupplungseinrichtung ohne elektrische Anschlußvorrichtung nennenswert verkompliziert wird.

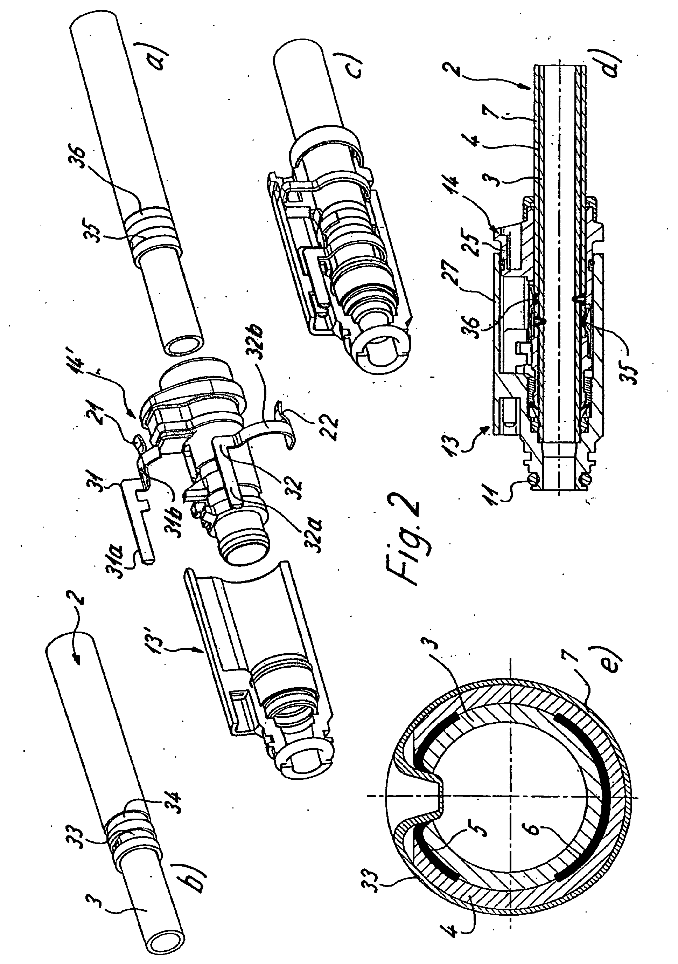

Eine alternative Ausführungsform zeigt Fig. 2.

Auch hier werden ein hülsenartiges Außenteil 13' und ein hülsenartiges Innenteil 14' genutzt, wobei das Außenteil 13' der Fig. 1 dem Außenteil 13 der Fig. 1 ganz oder zumindest im wesentlichen entspricht. Allerdings sind hier nur zwei der Stromschienenstücke 31, 32 vorgesehen. Gemäß Fig. 2b erfordert nach Fig. 2 zudem der Hybridschlauch 2, der an sich der Fig. 1 entspricht, einer anderen, etwas spezielleren Vorbearbeitung.

So wird zwar nach wie vor am freien axialen Ende vollständig über eine gewisse Strecke der Fluidschlauch 3 freigelegt, das Freilegen der elektrischen Leiter 5, 65 erfolgt aber durch nur ringweises - segmentweises - Abtrennen des äußeren Isoliermantels 7 an zwei axialen Stellen (Fig. 2a). In diese ringartigen Freimachungen 33, 34 werden sodann zunächst ganz rundum geschlossene oder geschlitzte oder segmentartige Kontaktringe 35, 36 eingesetzt (z.B. aufgeschrumpft und verprägt; Fig. 2a, 2e), welche radiale Kontaktspitzen 37 aufweisen, welche die Leiter 5, 6 kontaktieren.. Damit ist jeder der elektrischen Kontakte an einer axialen Stelle rundum zugänglich (Fig. 2c).

Dem entspricht die Auslegung der Stromschienenstücke 31, 32. Es sind nur noch zwei der Kontaktstecker 18, 19 bzw. der Stromschienenstücke 31, 32 vorgesehen, die jeweils innerhalb der Hülse an verschiedenen axialen Stellen die innere Hülse durchtreten.

Dabei sind die äußeren Abschnitte 15a, 16a, 17a der Stromschienenstücke 31, 32 ausgehend vom Ort ihres Durchtrittes durch das hülsenartige Innenteil 14 wiederum jeweils zu parallel nebeneinander liegenden und an einem Umfangsabschnitt des hülsenartigen Innenteils 14 zusammengefassten Kontaktsteckern 18, 19 gebogen, an die entweder direkt korrespondierende Leiter angeschlossen werden können oder korrespondierende Stecker, Buchsen oder ähnliche Einrichtungen.

Die inneren Abschnitte 31b, 32 der Stromschienenstücke sind dagegen derart ausgerichtet, dass sie wiederum im wesentlichen tangential zu einem Zylinder liegen, dessen Oberfläche die Kontaktringe 35, 36 ausbilden. An ihren freien Enden bilden sie durch eine kleine Durchbiegung jeweils wiederum axial und um 180° am Außenumfang zueinander versetzte Federkontakte 21,22 aus.

Die Montage erfolgt in einfachster Weise durch Abisolieren, Aufbringen der Kontaktringe 35, 36 (Fig. 2e) und Aufschieben der Innen- und der Außenhülse 13, 14 in den Zustand der Fig. 2d.

### Bezugszeichenliste

- Anschlussvorrichtung: 1
- Hybridschlauch: 2
- Innerer Fluidschlauch: 3
- Zwischenlage: 4
- Leiter: 5,6
- Isoliermantel: 7
- Verbindungsvorrichtung: 8, 9
- Fluidstecker: 10
- Dichtungen: 11
- Rastmittel: 12
- hülsenartiges Außenteil: 13
- hülsenartiges Innenteil: 14
- Stromschienenstücke: 15, 16, 17
- äußere Abschnitte: 15a, 16a, 17a
- innere Abschnitte: 16b, 17b
- Kontaktstecker: 18,19,20
- Federkontakt: 22,23
- Rastausnehmung: 24
- radialer Vorsprung: 25
- Rastvorsprung: 26
- seitlicher Ansatz: 27
- Öffnung: 28
- Vorsprünge: 29, 30
- Stromschienenstücke: 31, 32
- äußere Abschnitte: 31a, 32a
- innere Abschnitte: 31b, 32b
- Freimachungen: 33, 34
- Kontaktringe: 35,36

## Patentansprüche

1. Anschlussvorrichtung (1) für das freie Ende eines Hybridschlauchs (2), der einen mehrschichtigen Aufbau mit einem inneren flexiblen Fluid-, insbesondere Pneumatikschlauch (3) sowie wenigstens einen, insbesondere direkt auf dem Außenumfang des Fluidschlauchs (3) oder auf eine Trägerschicht (4) aufgebrachten streifenartige Leiter (5,6) aufweist, welche von einem Isoliermantel (7) umgeben ist, mit
a) einer ersten Verbindungsvorrichtung (8) für eine externe Pneumatikleitung, mit welcher der Fluidschlauch (3) verbunden ist,
b) einer zweiten Verbindungsvorrichtung (9) für externe elektrische Leiter, welche mit dem wenigstens einen elektrischen Leiter (5, 6) des Hybridschlauchs (2) verbunden ist,
c) ein hülsenartiges Innenteil (14) und ein ebenfalls hülsenartiges Außenteil (13), das zumindest abschnittsweise auf das freie axiale Ende des Hybridschlauchs (2) aufschiebbar ist,
d) wobei das Außenteil (13) die erste Anschlussvorrichtung (8) für die Fluidleitung (3) und das Innenteil (14) die Anschlussvorrichtung (9) für den wenigstens einen elektrischen Leiter (5, 6) des Hybridschlauchs (2) aufweist, und
e) das Innenteil (14) dazu ausgelegt ist, den wenigstens einen Leiter (5, 6) des Hybridschlauches (2) in beliebiger Drehausrichtung des Hybridschlauches (2) zur Anschlussvorrichtung (1) zu kontaktieren
f) wobei das hülsenartige Innenteil (14) mit wenigstens einem Stromschienenstück (15, 16, 17) versehen ist, welches das hülsenartige Innenteil (14) von außen nach innen durchsetzt,
**dadurch gekennzeichnet, dass**
g) das Stromschienenstück (15, 16, 17) an seinem freien Ende mindestens einen Federkontakt (22, 23) ausbildet.

2. Anschlussvorrichtung nach Anspruch 1, **dadurch gekennzeichnet, das** ein äußerer Abschnitt (15a, 16a, 17a) des Stromschienenstücks (15,16,17) ausgehend vom Ort seines Durchtrittes durch das hülsenartige Innenteil (14) zu einem an einem Umfangsabschnitt des hülsenartigen Innenteils (14) angeordneten Kontaktstecker (18, 19, 20) gebogen ist.

3. Anschlussvorrichtung nach einem der vorstehenden Ansprüche, **dadurch gekennzeichnet, dass** die äußeren Abschnitte (15a, 16a, 17a) der Stromschienenstücke (15, 16, 17) jeweils zu parallel nebeneinanderliegenden Kontaktsteckern (18, 19, 20) gebogen sind.

4. Anschlussvorrichtung nach einem der vorstehenden Ansprüche, **dadurch gekennzeichnet, dass** der innere Abschnitt (16b, 17b) des Stromschienenstücks (15, 16, 17) derart ausgerichtet ist, dass er im wesentlichen tangential zum elektrischen Leiter (5,6) des Hybridschlauchs (2) ausbildet ist.

5. Anschlussvorrichtung nach einem der vorstehenden Ansprüche, **dadurch gekennzeichnet, dass** drei der Federkontakte (22, 23) um jeweils 120° am Innenumfang des Innenteils (14) versetzt zu einander angeordnet sind und eine Breite bezüglich des Innenumfanges des Innenteils (14) aufweisen, dass die Leiter (5,6) beim Aufschieben des hülsenartigen Innenteils (14) auf den Hybridschlauch (2) unabhängig von der Winkelausrichtung mindestens zweifach kontaktiert werden.

6. Anschlussvorrichtung nach einem der vorstehenden Ansprüche, **dadurch gekennzeichnet, dass** das innere Hülsenteil (14) an seinem vom Hybridschlauch (2) abgewandten Ende eine umlaufende Rastausnehmung (24) zum Zusammenwirken mit dem äußeren Hülsenteil (13) aufweist und einen umfangsseitigen Vorsprung (25) in axialer Richtung hinter dem Kontaktstecker (18, 19, 20) aufweist.

7. Anschlussvorrichtung nach einem der vorstehenden Ansprüche, **dadurch gekennzeichnet, dass** das äußere Hülsenteil (13) einen inneren Rastvorsprung (26) zum Zusammenwirken mit der inneren Rastausnehmung (24) des inneren Hülsenteils (14) sowie einen seitlichen Ansatz (27) aufweist, der am Vorsprung (25) des inneren Hülsenteils (14) anliegt und im zusammengesteckten Zustand den Federkontakt (22, 23) aufnimmt.

8. Anschlussvorrichtung nach einem der vorstehenden Ansprüche, **dadurch gekennzeichnet, dass** das Freilegen des wenigstens einen elektrischen Leiters (5, 6) des Hybridschlauchs (2) durch ringweises - segmentweises - Abtrennen des äußeren Isoliermantels (7) and verschiedenen axialen Stellen erfolgt, wobei in die ringartige wenigstens eine Freimachung (33, 34) wenigstens ein Kontaktring (35, 36) eingesetzt ist.

9. Anschlussvorrichtung nach einem der vorstehenden Ansprüche, **dadurch gekennzeichnet, dass** die inneren Abschnitte (31 b, 32b) der Stromschienenstücke (15, 16, 17) derart ausgerichtet sind, dass sie axial zueinander versetzt am Innenumfang des Innenteils (14) liegen, so dass sie im montierten Zustand jeweils einen Kontaktring (35, 36) kontaktieren.

10. Anschlussvorrichtung nach einem der vorstehenden Ansprüche, **dadurch gekennzeichnet, dass** der Kontaktring (35, 36) rundum geschlossen oder geschlitzt oder segmentartig ausgebildet ist und sich radial erstreckende Kontaktspitzen aufweist, welche den Leiter (5, 6) kontaktieren.

## Claims

1. Connection device (1) for the free end of a hybrid hose (2) which has a multi-layer construction having an inner flexible fluid hose, in particular pneumatic hose (3), and at least one strip-like conductor (5, 6) which in particular is applied directly to the outer circumference of the fluid hose (3) or onto a backing layer (4) and which is surrounded by an insulating sheath (7), comprising
a) a first connector (8) for an external pneumatic line, to which the fluid hose (3) is connected,
b) a second connector (9) for external electrical conductors, which is connected to the at least one electrical conductor (5, 6) of the hybrid hose (2),
c) a sleeve-like inner part (14) and a likewise sleeve-like outer part (13), at least a section of which can be pushed onto the free axial end of the hybrid hose (2),
d) wherein the outer part (13) has the first connector (8) for the fluid line (3) and the inner part (14) has the connector (9) for the at least one electrical conductor (5, 6) of the hybrid hose (2), and
e) the inner part (14) is designed for making contact with the at least one conductor (5, 6) of the hybrid hose (2) in any desired rotary orientation of the hybrid hose (2) relative to the connection device (1),
f) wherein the sleeve-like inner part (14) is provided with at least one conductor rail piece (15, 16, 17) which passes through the sleeve-like inner part (14) from outside to inside,
**characterized in that**
g) the conductor rail piece (15, 16, 17) forms at least one spring contact (22, 23) at its free end.

2. Connection device according to Claim 1, **characterized in that** an outer section (15a, 16a, 17a) of the conductor rail piece (15, 16, 17), starting from the location of its passage through the sleeve-like inner part (14), is bent to form a contact plug (18, 19, 20) arranged at a circumferential section of the sleeve-like inner part (14).

3. Connection device according to either of the preceding claims, **characterized in that** the outer sections (15a, 16a, 17a) of the conductor rail pieces (15, 16, 17) are each bent to form contact plugs (18, 19, 20) lying in parallel next to one another.

4. Connection device according to one of the preceding claims, **characterized in that** the inner section (16b, 17b) of the conductor rail piece (15, 16, 17) is oriented in such a way that it is formed essentially tangentially to the electrical conductor (5, 6) of the hybrid hose (2).

5. Connection device according to one of the preceding claims, **characterized in that** three of the spring contacts (22, 23) are arranged offset from one another by in each case 120° at the inner circumference of the inner part (14) and have a width relative to the inner circumference of the inner part (14) such that contact is made with the conductors (5, 6) at least twice irrespective of the angular orientation when pushing the sleeve-like inner part (14) onto the hybrid hose (2).

6. Connection device according to one of the preceding claims, **characterized in that** the inner sleeve part (14) has an encircling catch recess (24) at its end remote from the hybrid hose (2) for interacting with the outer sleeve part (13) and a circumferential projection (25) in the axial direction behind the contact plug (18, 19, 20).

7. Connection device according to one of the preceding claims, **characterized in that** the outer sleeve part (13) has an inner catch projection (26) for interacting with the inner catch recess (24) of the inner sleeve part (14) and a lateral extension (27) which bears against the projection (25) of the inner sleeve part (14) and accommodates the spring contact (22, 23) in the fitted-together state.

8. Connection device according to one of the preceding claims, **characterized in that** the at least one electrical conductor (5, 6) of the hybrid hose (2) is exposed by cutting off the outer insulating sheath (7) in a ring-like, segmental manner at various axial points, at least one contact ring (35, 36) being inserted into the at least one ring-like clearance portion (33, 34).

9. Connection device according to one of the preceding claims, **characterized in that** the inner sections (31b, 32b) of the conductor rail pieces (15, 16, 17) are oriented in such a way that they lie at the inner circumference of the inner part (14) in such a way as to be axially offset from one another, such that they each make contact with a contact ring (35, 36) in the assembled state.

10. Connection device according to one of the preceding claims, **characterized in that** the contact ring (35, 36) is closed all round or slotted or designed segmentally and has radially extending contact tips which make contact with the conductor (5, 6).

## Revendications

1. Système de raccordement (1) pour l'extrémité libre d'un tuyau hydride (2), qui présente une structure à plusieurs couches avec un tuyau souple intérieur pour fluide, en particulier un tuyau pneumatique (3) ainsi qu'au moins un conducteur (5, 6) en forme de bande appliqué en particulier directement sur la périphérie extérieure du tuyau pour fluide (3) ou sur une couche support (4), qui est entourée par une enveloppe isolante (7), comprenant
a) un premier dispositif de raccordement (8) pour une conduite pneumatique externe, à laquelle est relié le tuyau pour fluide (3),
b) un deuxième dispositif de raccordement (9) pour des conducteurs électriques externes, qui sont reliés à l'au moins un conducteur électrique (5, 6) du tuyau hybride (2),
c) un élément intérieur en forme de douille (14) et un élément extérieur (13) également en forme de douille qui peut être placé au moins partiellement sur l'extrémité axiale libre du tuyau hybride (2),
d) l'élément extérieur (13) présentant le premier dispositif de raccordement (8) pour la conduite de fluide (3) et l'élément intérieur (14) présentant le dispositif de raccordement (9) pour l'au moins un conducteur électrique (5, 6) du tuyau hybride (2), et
e) l'élément intérieur (14) est conçu pour établir le contact avec l'au moins un conducteur (5, 6) du tuyau hybride (2) quelle que soit l'orientation en rotation du tuyau hybride (2) par rapport au système de raccordement (1)
f) l'élément intérieur en forme de douille (14) étant pourvu d'au moins un barreau conducteur (15, 16, 17), qui traverse l'élément intérieur en forme douille (14) de l'extérieur vers l'intérieur,
**caractérisé en ce que**
g) le barreau conducteur (15,16, 17) réalise au niveau de son extrémité libre au moins un contact élastique (22, 23).

2. Système de raccordement selon la revendication 1, **caractérisé en ce qu'**une partie extérieure (15a, 16a, 17a) du barreau conducteur (15, 16, 17) partant de l'endroit de son passage au travers de l'élément intérieur en forme de douille (14) est incurvée en une fiche de contact (18, 19, 20) disposée au niveau d'une section périphérique de l'élément intérieur en forme de douille (14).

3. Système de raccordement selon l'une des revendications précédentes, **caractérisé en ce que** les parties extérieures (15a, 16a, 17a) du barreau conducteur (15, 16, 17) sont incurvées respectivement en des fiches de contact (18, 19, 20) parallèles.

4. Système de raccordement selon l'une des revendications précédentes, **caractérisé en ce que** la partie intérieure (16b, 17b) du barreau conducteur (15, 16, 17) est orientée de sorte qu'elle est formée de manière essentiellement tangentielle par rapport au conducteur électrique (5, 6) du tuyau hybride (2).

5. Système de raccordement selon l'une des revendications précédentes, **caractérisé en ce que** trois des contacts élastiques (22, 23) sont décalés les uns par rapport aux autres respectivement de 120° au niveau de la périphérie intérieure de l'élément intérieur (14) et présentent une largeur par référence à la périphérie intérieure de l'élément intérieur (14), **en ce que** lors de la mise en place de l'élément intérieur en forme de douille (14) sur le tuyau hybride (2), les conducteurs (5, 6) sont mis en contact au moins deux fois indépendamment de l'orientation angulaire.

6. Système de raccordement selon l'une des revendications précédentes, **caractérisé en ce que** la douille intérieure (14) présente au niveau de son extrémité opposée au tuyau hybride (2) un évidement d'encliquetage (24) périphérique permettant la coopération avec la douille extérieure (13) et présente une saillie (25) côté périphérique dans la direction axiale derrière la fiche de contact (18, 19, 20).

7. Système de raccordement selon l'une des revendications précédentes, **caractérisé en ce que** la douille extérieure (13) présente une saillie d'arrêt intérieure (26) permettant la coopération avec l'évidement d'encliquetage intérieur (24) de la douille intérieure (14) ainsi qu'un épaulement latéral (27) qui s'appuie contre la saillie (25) de la douille intérieure (14) et reçoit le contact élastique (22, 23) à l'état enfiché.

8. Système de raccordement selon l'une des revendications précédentes, **caractérisé en ce que** le dénudage de l'au moins un conducteur électrique (5, 6) du tuyau hybride (2) se fait par une séparation annulaire - par segments - de l'enveloppe isolante (7) extérieure en différents endroits axiaux, au moins un anneau de contact (35, 36) étant inséré dans l'au moins un dénudage (33, 34) de type annulaire.

9. Système de raccordement selon l'une des revendications précédentes, **caractérisé en ce que** les parties intérieures (31 b, 32b) des barreaux conducteurs (15, 16, 17) sont orientées de telle manière qu'elles sont décalées axialement l'une par rapport à l'autre au niveau de la périphérie intérieure de l'élément intérieur (14) si bien qu'à l'état monté un anneau de contact (35, 36) est toujours en contact.

10. Système de raccordement selon l'une des revendications précédentes, **caractérisé en ce que** l'anneau de contact (35, 36) est entièrement fermé ou fendu ou réalisé en forme de secteur et présente des pointes de contact s'étendant radialement qui établissent le contact avec le conducteur (5, 6).
